# EUROPEAN PATENT APPLICATION

(11) **EP 4 841 929 A1**
(43) Date of publication of application: **18.11.2026**
(21) Application number: 26175397.4
(22) Date of filing: 29.04.2026
(51) Int. Cl.: H04L 9/06

(54) **QUANTUM COMMUNICATION USING BALANCED PRIVACY AMPLIFICATION**

(30) Priority: 15.05.2025 DE 102025118790
(71) Applicant: Quantum Optics Jena GmbH, 07745 Jena (DE)
(72) Inventor: HEILMANN, René, 99195 Schwansee (DE)
(74) Representative: Richardt Patentanwälte PartG mbB

(57) **Abstract**

Disclosed is a quantum communication method (100) comprising measuring quantum states on a predefined set of measurement channels (200) in accordance with a quantum communication protocol, the method (100) comprising: receiving (102) a sifted sequence (202, 202') of bits; receiving (104) measurement information (204) relating bits of the sifted sequence (202, 202') to respective measurement channels (200); determining (106) a set of correct and incorrect bits in the sifted sequence (202, 202') for performing an error correction, resulting in an error corrected sequence (206) of bits; determining (108) an imbalance of the measurement channels (200) assigned to the correct bits using the measurement information (204); and further processing (110) the error corrected sequence (206) of bits in dependence of the imbalance.

## Description

### FIELD OF THE INVENTION

The present disclosure relates to a method, computer program, receiver and system for quantum communication, and more particularly, to a method for processing measured quantum states in a quantum communication protocol to ensure secure data transmission in the presence of a potential eavesdropper.

### BACKGROUND

Quantum communication is an emerging field that leverages the principles of quantum mechanics to enable secure communication. Unlike classical communication systems, quantum communication systems use quantum bits or qubits, which can exist in multiple states simultaneously. In quantum communication, due to the quantum nature of the exchanged information, attempts to eavesdrop on the communication may alter said exchanged information, and may thus alert the communicating parties to the presence of an intruder. Quantum key distribution (QKD) in particular is one of the most promising applications of quantum communication, allowing two parties to generate a shared, secret key that can be used for encrypting and decrypting messages.

The document DE 10 2022 126 262 A1 describes a method for data transmission between a first receiver and a second receiver with quantum key exchange, wherein an error determination is performed between a first sifted key and a second sifted key to generate a common key at both receivers. For the error determination, the sifted keys are each divided into blocks. One or more parity bits are then calculated for each block. The one or more parity bits of the blocks are then transmitted to the respective other receiver. Thereafter, erroneous blocks are determined at the first receiver and at the second receiver by comparing the calculated one or more parity bits with the one or more parity bits received from the respective other receiver for each block. In order to generate the common key, the erroneous blocks of the first and second sifted keys are discarded independently at the first receiver and at the second receiver, respectively.

The document US 12 124 364 B2 describes a random number quality management method and apparatus. A synthetic judgment section performs synthetic judgment of randomness test for shared random numbers by combining a result of a first randomness test and a result of a second randomness test, the first randomness test being performed on the shared random numbers by a first communication device and the second randomness test being performed on the shared random numbers by a second communication device wherein a result of the synthetic judgment is safely notified to at least one of the first communication device and the second communication device, wherein the first randomness test and the second randomness test are different with respect to at least one of randomness test to be used and random number portion to be tested.

The document US 8 693 691 B2 describes methods and systems to authenticate systems in a quantum key distribution environment based on limited disclosures and identical, re-usable, pre-provisioned authentication keys.

### SUMMARY OF THE INVENTION

The invention provides for a quantum communication method, a computer program, a quantum communication receiver and a quantum communication system in the independent claims. Embodiments are given in the dependent claims. The objectives underlying the invention are solved by the features of the independent claims.

In one aspect, the disclosure describes a quantum communication method comprising measuring quantum states on a predefined set of measurement channels in accordance with a quantum communication protocol. The method comprises receiving a sifted sequence of bits. The method further comprises receiving measurement information relating bits of the sifted sequence to respective measurement channels. The method further comprises determining a set of correct and incorrect bits in the sifted sequence for performing an error correction, resulting in an error corrected sequence of bits. The method further comprises determining an imbalance of the measurement channels assigned to the correct bits using the measurement information. The method further comprises further processing the error corrected sequence of bits in dependence of the imbalance.

In another aspect, the disclosure describes a computer program comprising machine executable instructions, wherein execution of the machine executable instructions causes a quantum communication receiver to process quantum communication information, wherein the processing of the quantum communication information comprises receiving a sifted sequence of bits. The processing of the quantum communication information further comprises receiving measurement information relating bits of the sifted sequence to respective measurement channels. The processing of the quantum communication information further comprises determining a set of correct and incorrect bits in the sifted sequence for performing an error correction, resulting in an error corrected sequence of bits. The processing of the quantum communication information further comprises determining an imbalance of the measurement channels assigned to the correct and incorrect bits using the measurement information. The processing of the quantum communication information further comprises further processing the error corrected sequence of bits in dependence of the imbalance.

In another aspect, the disclosure describes a quantum communication receiver configured for measuring quantum states on a predefined set of measurement channels in accordance with a quantum communication protocol, wherein the quantum communication receiver comprises a memory unit storing machine executable instructions, wherein execution of the machine executable instructions causes the quantum communication receiver to receive a sifted sequence of bits. Execution of the machine executable instructions further causes the quantum communication receiver to receive measurement information relating bits of the sifted sequence to respective measurement channels. Execution of the machine executable instructions further causes the quantum communication receiver to determine a set of correct and incorrect bits in the sifted sequence for performing an error correction, resulting in an error corrected sequence of bits. Execution of the machine executable instructions further causes the quantum communication receiver to determine an imbalance of the measurement channels assigned to the correct bits using the measurement information. Execution of the machine executable instructions further causes the quantum communication receiver to further process the error corrected sequence of bits in dependence of the imbalance.

In another aspect, the disclosure describes a quantum communication system, wherein the quantum communication system comprises at least a first and second quantum communication receiver.

The present disclosure may be distinguished over the subject matter of US 12 124 364 B2 at least in that the "imbalance" described herein relates to a physical skew of quantum measurement channels themselves, that is to observable asymmetries stemming from e.g. detector biases or imperfections, photon loss or dead times of detectors which may leak information about a key to an eavesdropper. By contrast, the "randomness test" in US 8 693 691 B2 concerns post-generation tests on shared random numbers, in which communication devices run randomness tests, exchange results and make a synthetic judgment on whether a particular block of random numbers passes or fails and thus does not concern measurement channel distributions or imbalances therein.

The present disclosure may be distinguished over the subject matter of US 8 693 691 B2 at least in that D2 is focused on modifying bits based on disclosed detection intervals to subsequently derive keys from corrected key material. Aside from this detection interval centred approach, US 8 693 691 B2 does not evaluate contributions of individual measurement channel contributions in a quantum communication as well as imbalances therein, nor is any further processing based on such imbalances disclosed.

### BRIEF DESCRIPTION OF THE DRAWINGS

In the following, examples are described in greater detail making reference to the drawings in which:
Fig. 1 is a flowchart for performing the quantum communication method according to the present subject matter.
Fig. 2 is a schematic of a quantum communication system comprising a first and second quantum communication receiver.
Fig. 3A is a schematic of an exemplary sifting and error correction operation performed on a first and second raw sequence of bits.
Fig. 3B is a schematic of a further exemplary sifting and error correction operation performed on a first and second raw sequence of bits.
Fig. 4 is a bar plot showing an imbalance in contributions of four measurement channels to an error corrected sequence.
Fig. 5 is a block diagram of an exemplary computer system for implementing at least part of the present method in accordance with an example of the present subject matter.

### DETAILED DESCRIPTION

In the following, two communicating parties conducting the quantum communication according to the disclosed subject matter will be referred to as "communicating parties". A potential eavesdropper that may try to gain information about information exchanged between the communicating parties. The term "communicating parties" may refer to computer systems, in particular quantum communication receivers, configured for performing the quantum communication method or to persons performing the respective acts of quantum communication. The term "eavesdropper" may refer to one or more computer systems configured to extract information from the quantum communication performed between the communicating parties or to a person performing the respective acts of extracting information from said quantum communication.

A quantum communication protocol according to the present subject matter may in particular comprise obtaining quantum information by measuring entangled pairs of photons. Said quantum information may exemplarily relate to polarization states of photons. A polarization of a photon may exemplarily be measured in one of two measurement bases. A first measurement basis will in the following be denoted as the "H/V basis" and measures a horizontal or vertical polarization of a photon relative to a predetermined reference direction. A second measurement basis will in the following be denoted as the "D/A basis" and measures an antidiagonal or diagonal polarization of a photon relative to a predetermined reference direction. It is to be understood that the disclosed method is not to be restricted to these choices of the first and second measurement basis. For example, either the first or second measurement basis may instead measure a left-circular or right-circular polarization of a photon, with the measurement basis for obtaining measurements of said left- or right-polarization being denoted as the "L/R" basis. Instead of a polarization, the quantum information may refer to other properties of photons, for example to phase values. Measurement channels indicate measured quantum states of polarizations measured by both parties conducting the quantum communication protocol. For example, if both communication parties measure photons from a particular entangled pair of photons to be horizontally polarized, said photons will be denoted as contributing to the measurement channel "HH". Similarly, the measurement channels "VV", "DD", and "AA" indicate measurements of matching vertical, diagonal and antidiagonal polarizations of photons by the communicating parties. However, it may occur that the communicating parties measure different polarizations. For example, the measurement channel "HV" indicates a measurement of horizontal polarization by one of the communicating parties and a corresponding measurement of vertical polarization by the other of the communicating parties. The described examples apply in particular to pairs of entangled photons generated via type-0 and/or type-I down-conversion.

In an alternative example, pairs of entangled photons may be generated via type-II down-conversion. In this example, the measurement channels VH (or HV) may indicate matching measurements, while the measurement channels HH and VV may indicate mismatches. Similar changes apply if different measurement basis are used as described in the previous example. That is, if the L/R basis is used instead, the measurement channels LL and RR may indicate matching polarizations while the measurement channels LR (or RL) may indicate mismatches. However, for the sake of clarity and without restricting the scope of the provided examples, in the following the measurement bases HH and VV, as well as AA and DD are assumed to indicate matching polarizations.

Ideally, no mismatching measurements will occur, and the quantum information will be uniformly distributed across the four measurement channels HH, VV, DD and AA. However, due to attacks such as classical light attacks, photon attacks such as for example a photon-number-splitting attack or due to technical defects of hardware components implementing the quantum communication protocol, imbalances may arise in the contributions of these measurement channels. For example, photons may be measured to have horizontal polarizations more often than vertical polarizations, resulting in a disproportionately large contribution of the HH measurement channel compared to the VV measurement channel. Such an imbalance may arise due to deficiencies in hardware components used to implement the quantum communication protocol. For example, the imbalance may arise due to an insufficient sensitivity or efficiency of a detector measuring the photons or due to dead times of detectors, resulting in photons arriving at the detector not being registered. The imbalance may further arise due to different detectors being used by the communicating parties, wherein the different detectors may possess different dead times. Furthermore, a source providing the entangled pairs of photons may provide photons of different polarizations with different probabilities. Additionally, optical elements used to implement the quantum communication protocol may possess imperfect coatings or enable only imperfect transmissions. For example, different losses may exist for the different measurement channels, wherein said losses may accumulate from a source of the photons to the detection of the photons at the detector. Imperfections in optical elements contributing to the imbalance may be at least partially corrected, for example by a placement of polarization filters on a side of a polarizing beam splitter towards which incoming photons are transmitted or reflected by the polarizing beam splitter. Time-taggers configured to provide time stamps for time points of measurements may also be inaccurate.

The measured quantum states may indicate matching measurements of pairs of entangled photons. The measured quantum states may be denoted in a sequence of bits, wherein exemplary, the state HH may be denoted as "0" while the state VV is denoted as "1" for measurements in the H/V basis. Analogously, the state DD may be denoted as "0" while the state "AA" is denoted as "1" for measurements in the D/A basis.

It may be possible for the eavesdropper to obtain information about the choice of measurement basis used by the communicating parties. That is, the eavesdropper may know whether any measurement performed by any one of the communicating parties was performed in the H/V basis or the D/A basis without knowing the outcome of said measurement. The eavesdropper may also have information about the time at which said measurements were performed by the communicating parties. Furthermore, the eavesdropper may have knowledge of general count rates of the measurement channels.

The present subject matter may advantageously enable correcting the imbalance in contributions of the measurement channels, thereby reducing information about the quantum information accessible to the eavesdropper. Mathematical proofs of the security of a quantum communication protocol may be based on an assumption of a number of measurements being equal across all measurement channels. Thus, the present subject matter may enable a secure execution of quantum communication protocols despite imperfections in hardware components resulting in the imbalance. The disclosed subject matter may further advantageously compensate for technical deficiencies resulting in the imbalance without requiring hardware components to be replaced or repaired, thus avoiding for example a need for selecting and implementing suitable detectors, in particular considering that single photon detectors in the infrared region may vary in their efficiencies and dead times.

According to one example, the further processing may comprise performing a privacy amplification to provide a secure sequence of bits, wherein the privacy amplification is performed in proportion to the imbalance. Privacy amplification may advantageously enable the communicating parties to reduce an error corrected sequence of bits possessed by both communicating parties to a secure sequence of bits, such that the eavesdropper possesses less information about the secure sequence of bits than about the error corrected sequence of bits. Thus, privacy amplification may increase the security of the quantum communication protocol. In particular, the privacy amplification may be adapted to the imbalance, as larger imbalances potentially enable the eavesdropper to obtain more information about the quantum information exchanged by the communicating parties than smaller imbalances.

The privacy amplification may be characterized by a privacy amplification ratio, PAR, which relates the length of the error free sequence to the length of the secure sequence obtained after privacy amplification, for example as $length \left(secure sequence\right) = length \left(error corrected sequence\right) / PAR .$ The PAR may be determined using factors determined during an error correction which quantify a number of bits which may have been leaked to the eavesdropper. For example, the PAR may be additionally determined using the quantum bit error rate, QBER. The PAR may exemplarily be determined on the basis of a particular quantum communication protocol. In particular, the PAR may be determined using the QBER and parity bit lengths of parity bits exchanged between two communicating parties.

That is, applying the privacy amplification to the error corrected sequence of bits to obtain the secure sequence of bits may comprise a greater compression of information for greater imbalances, thereby accounting for the increased potential information the eavesdropper may possess for greater imbalances. The privacy amplification may result in information previously obtained by the eavesdropper becoming unusable to the eavesdropper. In particular, after privacy amplification, there may be no method more effective than brute force guessing for the eavesdropper to obtain knowledge of the secure sequence.

The following exemplary scenarios serve to illustrate the effect of privacy amplification on the information obtainable by the eavesdropper given different degrees of the imbalance:

### Example of an ideal scenario:

According to an ideal scenario, a raw sequence of bits obtained from measuring the quantum states may comprise a total of 1000 bits. Among these 1000 bits, the four measurement channels HH, VV, DD and AA contribute 250 bits each, that is, there is no imbalance present. In this case, public information about this sequence, that is information that is potentially accessible to the eavesdropper, makes up 50% of the sequence. The secure sequence of bits will thus be reduced to a length of 500 bits.

### Example of an extreme scenario:

In this scenario, in contrast to the previous scenario, one of the measurement channels, for example the "AA" in the D/A measurement basis is blind and does not contribute to the raw sequence of bits, meaning there is an imbalance present. Thus, the previously described raw sequence of bits is reduced to a total of 750 bits, wherein the remaining three measurement channels HH, VV and DD contribute equally. In this scenario, the eavesdropper may know the contribution of the D/A basis, for example using methods for determining the quantum bit error rate, QBER. The remaining secret of the raw sequence of bits is then no longer 50% but merely 33% of the 750 bits. If the eavesdropper were to permanently measure in the H/V basis, as D/A no longer needs to be measured, the remaining secret of the raw sequence of bits would be reduced to 0%.

### Example of an intermediate scenario:

In a further scenario, the imbalance may be present, however the degree of the imbalance may be lower than in the previously described extreme scenario. In this intermediate scenario, one measurement channel contributes less to the error corrected sequence of bits than the others.

The eavesdropper may know the count rates of the measurement channels and may thereby narrow the search space for identifying the error corrected sequence of bits. For example, the channel AA may only provide a single measurement, e.g. there is a single 1 in the error corrected sequence for the D/A basis. The eavesdropper then merely needs to test all possible positions of this 1, as all other positions in the D/A basis always yield a 0, thus resulting in a reduced search space for the eavesdropper. The raw sequences according to this example comprises 751 bits, with all channels except AA being equally distributed. If the eavesdropper were to permanently measure in the H/V basis, results of measurements from the D/A basis would need to be guessed, thereby increasing the QBER.

In another intermediate scenario, all four measurement channels may contribute different numbers of bits to the error corrected sequence of bits. For example, the measurement channels may respectively contribute 200, 300, 150 and 350 bits.

According to one example, the performing of the privacy amplification may comprise removing bits from the error corrected sequence in proportion to the imbalance. According to another example, the performing of the privacy amplification may comprise increasing the privacy amplification in proportion to the imbalance.

Increasing the privacy amplification in proportion to the imbalance advantageously enables information which may have been extracted by the eavesdropper from the number of measurements on the measurement channels to be made unusable for the eavesdropper, independently of a degree of the imbalance. For example, the length of the secure sequence may be determined using the length of a reduced error corrected sequence of bits. The length of said reduced error corrected sequence may for example be determined using the minimal number of measurements across all measurement channels for the error corrected sequence. For example, $length \left(modified error corrected sequence\right) = \left(Number of measurement channels\right) ∗$ min(contributions across all measurement channels). For two measurement bases resulting in four measurement channels as described above, this results in $length \left(modified error corrected sequence\right) = 4 ∗ min \left(HH, VV, DD, AA\right) .$

The length of the secure sequence may then be given as $length \left(secure sequence\right) = length \left(modified error corrected sequence\right) / PAR .$

This approach requires bits to be removed from the error corrected sequence, as the length of the modified error corrected sequence is determined by the minimal number of measurements across the measurement channels. Alternatively, the removing of bits from the error corrected sequence may be avoided, wherein the length of the secure sequence is instead determined by a modified PAR. In this example, the PAR may be multiplied by a factor *PAR_{equalize}* which quantifies the imbalance.

The PAR may for example be corrected by a factor which sums up the total number of measurements across all measurements and divides this sum by the number of measurement channels multiplied by the minimal number of measurements across all measurement channels, e.g. *PAR_{equalize} =* (*HH + VV + DD* + *AA*)/(4 _{*} min (*HH, VV, DD, AA*)), wherein the modified PAR is denoted as *PAR' = PAR* _{*} *PAR_{equalize}.* The length of the secure sequence may then be determined as $length \left(secure sequence\right) = length \left(error corrected sequence\right) / PAR ′ .$

A use of the corrected PAR, PAR', advantageously avoids the need to remove bits from the error corrected sequence when performing the privacy amplification to obtain the secure sequence of bits. Thus, no choice has to be made as to which bits should be removed from the error corrected sequence, thereby avoiding an introduction of a bias in the bits to be removed and retaining the randomness of the measurements.

A use of PAR' is further advantageous as a failure of a detector, i.e. a particular measurement channel yielding zero measurements, results in a value of *PAR_{equalize}* = ∞. Thus, it may be automatically ensured that no secure sequence may be created, as in such a case, the eavesdropper may be able to reduce the remaining secret to zero, as described before in the scenario of an extreme imbalance.

In another example, wherein no imbalance is present, the maximal possible length of the error corrected sequence may advantageously be retained by the use PAR', as in this case *PAR_{equalize}* reduces to a value of 1.

According to one example, the removing of the bits from the error corrected sequence comprises removing bits in accordance with a selection scheme. The selection scheme may select the bits to be removed from the error corrected sequence by selecting a subsequence of bits from the error corrected sequence, in particular wherein the subsequence is located at the beginning or the end of the error corrected sequence. In another example, the selection scheme may select the bits to be removed randomly. In yet another example, the selection scheme may select the bits to be removed using a periodic selection pattern. Said periodic pattern may comprise selecting every n-th bit in the error corrected sequence to be removed where n indicates an integer larger than 1, e.g. the removing may comprise removing every second, every third or every fifth bit in the error corrected sequence. The value of n may be chosen depending on the length of the error corrected sequence and the number of bits to be removed from the error corrected sequence to obtain a desired length of the error corrected sequence. In yet another example, the selection scheme may select the bits to be removed using a selection function, wherein the selection function is configured to provide a set of indices indicating the bits to be removed, wherein the selection function preferably comprises a modulo operation. For example, the selection function may take a seed value as an argument and perform a pseudorandom number generation resulting in the set of indicates indicating the bits to be removed. A modulo operation may be used to ensure that the selection function does not provide indices in the set of indices larger than the number of bits in the error corrected sequence. The selection scheme may advantageously ensure the error corrected sequence to be of a correct length as required for performing the privacy amplification.

According to one example, the privacy amplification further comprises applying a function to the error corrected sequence, wherein the function maps inputs of an arbitrary length to a space of outputs having a fixed length, such that the outputs are statistically independent and uniformly and randomly distributed in the space of outputs, wherein the function is configured to provide the secure sequence as a secure sequence of fixed length given the error corrected sequence as input, wherein the function in particular comprises a hash function.

According to this example, the function advantageously fulfills the NIST criteria for randomness, meaning that the function provides an output that is computationally difficult to reverse. Thus, the information possessed by the eavesdropper is advantageously reduced by applying the function. As the function further provides uniformly and randomly distributed outputs for a variety of inputs, the eavesdropper would likely obtain a secure sequence of bits different from the secure sequence of bits obtained by the communicating parties if the eavesdropper did not fully identify the error corrected sequence given as input to the function.

According to one example, the fixed length of the secure sequence and the privacy amplification determine a required length of the error corrected sequence. According to this example, a required total number of measurements may be automatically determined, indicating a minimal time for which the quantum communication protocol needs to be performed for the received sifted sequence of bits to be of sufficient length.

According to one example, the privacy amplification comprises determining if the error corrected sequence is at least as long as the required length, and in case of the error corrected sequence being at least as long as the required length, applying the function to the error corrected sequence, resulting in the secure sequence, or in case of the error corrected sequence being shorter than the required length, extending the error corrected sequence.

The determining if the error corrected sequence is at least as long as the required length advantageously enables an automatic checking if the error corrected sequence is sufficiently long for applying a desired function. By ensuring that the error corrected sequence is at least as long as the required length, the number of possible input sequences which may be provided to the function may advantageously be increased by increasing the required length, making it more difficult for the eavesdropper to identify the secure sequence of bits.

According to one example, the extending of the error corrected sequence comprises repeating the quantum communication method, resulting in a further error corrected sequence, and wherein the error corrected sequence is extended by combining the error corrected sequence with the further error corrected sequence. The extending of the error corrected sequence advantageously enables an automatic restarting of the quantum communication protocol in case the length of the error corrected sequence is deemed insufficient.

According to one example, the quantum communication method is performed continuously at least until the error corrected sequence has reached its required length. The continuous performing of the quantum communication method advantageously enables a continuous receiving of the sifted sequence and the measurement information. The further processing of the imbalance may advantageously be performed in parallel with the receiving of the sifted sequence and the measurement information, e.g. while an execution of the quantum communication protocol is ongoing.

According to one example, the function comprises any one of a SHA-2 family hash function, a SHA-3 family hash function, a Toeplitz hash function, a 2-universal hash function, or a rolling hash function. Using a function according to this example for the privacy amplification may advantageously ensure a compatibility of the secure sequence with commonly used classical encryption protocols, for example for cryptographic applications which specifically require a secure sequence obtained using the SHA256 hash function. The function may advantageously be chosen in accordance with a required level of security, e.g. if the SHA256 hash function is deemed to not fulfill said required level of security, the SHA512 hash function may be used instead.

According to one example, the further processing comprises determining if the imbalance fulfills a criterion, wherein the criterion preferably comprises evaluating statistical measures on a number of measured quantum states in the measurement channels, the statistical measures exemplarily comprising a standard deviation and/or a variance.
Criterion may be determined by dividing total number of measurements by number of quantum channels to obtain an ideal number of measurements each measurement channel should contribute if there were no imbalance between the channels. Deviations of the actually measured contributions from this ideal number may then be used as a basis for the criterion of the imbalance, i.e. if at least one or at least some greater number of the deviations deviate from the ideal number by more than a specific percentage of the ideal number.
According to this example, the further processing further comprises providing an error signal if the criterion is fulfilled, wherein the error signal is preferably configured to trigger a repetition or a discontinuation of the quantum communication method.

For example, the error signal may advantageously be configured to discontinue the quantum communication method if more than a predetermined percentage of measured quantum states indicate mismatches between the communicating parties, e.g. if more than 10% of the measured quantum states include measurements such as HV, VH, AD or DA, wherein the communicating parties chose the same measurement basis but obtained different measurement results. The criterion may advantageously be adapted to specific hardware components, e.g. if a detector with a lower efficiency or sensitivity is used to perform the measurements, the criterion may only be fulfilled given a larger imbalance than if a detector with a higher efficiency or sensitivity were used instead. The error signal may advantageously enable an operator to perform maintenance operations on hardware components after the discontinuation of the quantum communication method. Said maintenance operations may result in a reduction of the imbalance for further measurements performed on the measurement channels after the execution of the quantum communication method is resumed.

According to one example, the secure sequence of bits comprises any one of a one-time pad, a private key for performing an asymmetric encryption algorithm, a seed for a random number generator, a password for authenticating a user or a password for securing a computer system or data stored on the computer system. The use of the secure sequence as a one-time pad may advantageously enable a secure encryption of information to be transmitted using the one-time pad between the communicating parties. The use of the secure sequence is not limited to a use as a one-time pad, instead the secure sequence may be used as a secure private key in any kind of asymmetric cryptography algorithm. The use of the secure sequence as a seed for a random number generator may advantageously avoid biases in a choice of the seed, as the secure sequence is based on the randomness resulting from measurements of quantum states. The use of the secure sequence as a password may advantageously increase a security of the password, as the secure sequence is based on the randomness resulting from measurements of quantum states.

According to one example, the quantum communication protocol comprises transmitting entangled photons across fiber-optic cables. Instead or alternatively, the entangled photons may be transmitted across free space. Transmitting entangled photons across fiber-optic cables advantageously enables existing telecommunication infrastructure, i.e. existing fiber-optic cables, to be leveraged for the quantum communication method. Transmitting entangled photons across free space advantageously enables applications of the quantum communication method in the field of aerospace technology. When transmitting entangled photons across fiber-optic cables, the quantum communication method further enables an imbalance arising due to varying coupling coefficients of the fiber optic cables to be accounted for by the privacy amplification.

According to one example, the quantum communication protocol comprises any one of a BB84 protocol, a BBM92 protocol, an E91 protocol, an RRDPS protocol, or a continuous-variable protocol for quantum key distribution. Advantageously, the quantum communication method may advantageously be applied to further process imbalances arising in a variety of quantum communication protocols.

According to one example, the measured quantum states comprise quantum states of an entangled set of photons, wherein at least one or more photons in the entangled set of photons comprises a wavelength of 810 nm, 785 nm, 740 nm or a wavelength in the short wavelength near infrared spectrum, in particular a wavelength in the C-band, the L-band, or the O-band. The entangled set of photons may in particular comprise an entangled pair of photons. According to another example, the entangled set of photons may comprise photons having wavelengths in the visible spectrum, in particular wavelengths between 500 and 550 nm. Said photons having wavelengths in the visible spectrum may enable applications of the disclosed method wherein the photons having wavelengths in the visible spectrum are transmitted through water.

The term "short wavelength near infrared spectrum" as used herein in particular comprises wavelengths between 700 nm and 1700 nm. The term "C-band" as used herein in particular comprises wavelengths between 1530 and 1570 nm, in particular 1550 nm. The term "L-band" as used herein in particular comprises wavelengths between 1570 and 1620 nm. The term "O-band" as used herein in particular comprises wavelengths of 1310 nm.

Photons in the entangled pair of photons may comprise identical or different wavelengths. For example, a pair of photons may comprise two photons both having wavelengths of 810 nm or two photons both having wavelengths of 1550 nm. In a further example, a pair of entangled photons may comprise a first photon with a wavelength of 1550 nm and a second photon with a wavelength of 810 nm. In yet another example, a pair of entangled photons may comprise a first photon with a wavelength of 740 nm and a second photon with a wavelength of 1310 nm. In yet another example, a pair of entangled photons may comprise a first photon with a wavelength of 785 nm and a second photon with a wavelength of 835 nm. In yet another example, a pair of entangled photons may comprise a first photon with a wavelength of 680 nm and a second photon with a wavelength of 1550 nm. The wavelengths of at least one photon in the entangled pair of photons may comprise an optical wavelength. The pairs of entangled photons having different wavelengths may for example be created by a process of non-degenerate spontaneous parametric down-conversion. The pairs of entangled photons having identical wavelengths may for example be created by a process of degenerate spontaneous parametric down-conversion. The described wavelengths of the photons in the entangled pairs of photons may advantageously be transmitted across existing fiber-optic cables.

The advantages described with regard to the disclosed quantum communication method may equally apply to the disclosed computer program, quantum communication receiver and quantum communication system.

Like numbered elements in the described figures are either equivalent elements or perform the same function. Elements which have been discussed previously will not necessarily be discussed in later figures if the function is equivalent.

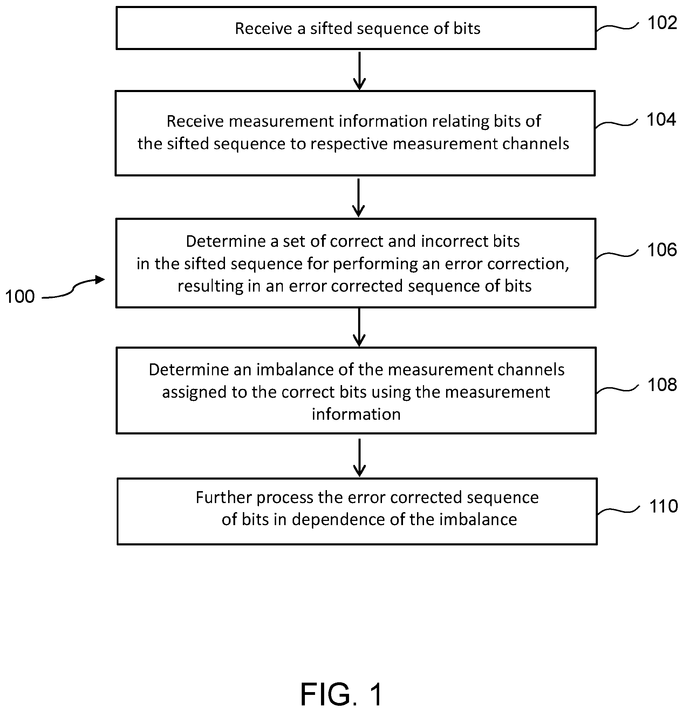

**Figure 1** is a flowchart for performing the quantum communication method 100 according to the present subject matter.

In step 102, a sifted sequence of bits is received, in particular by the communicating parties. Step 102 may be preceded by a sifting operation performed on a received raw sequence of bits and associated timestamps. In particular, the receiving 102 of the sifted sequence may comprise receiving a raw sequence of bits. The receiving 102 the sifted sequence may further comprise receiving a first and second sequence of measurement basis information relating bits of the raw sequence to respective measurement channels, wherein the first and second sequence of measurement basis information further comprises timestamps, wherein the timestamps are indicative of measurement times of the measuring of the quantum states on the predefined set of measurement channels. The receiving 102 of the sifted sequence may further comprise determining mismatches between the first and second sequences of measurement basis information using the timestamps. The receiving 102 of the sifted sequence may further comprise removing bits associated with the mismatches from the raw sequence, resulting in the sifted sequence.

In step 104, measurement information is received, in particular by the communicating parties. The measurement information may indicate which measurement basis was used for a registered event, such as an incoming photon. As in step 102, step 104 may be preceded by steps performed during the sifting operation. The receiving 104 of the measurement information may in particular comprise generating a subsequence of the first sequence of measurement basis information by removing measurement basis information associated with the mismatches from the first sequence of measurement basis information. The receiving 104 of the measurement information may further comprise receiving the measurement information as the subsequence of the first sequence of measurement basis information.

In step 106, a set of correct and incorrect bits in the sifted sequence may be determined. The determining of the correct and incorrect bits may be used for performing an error correction, wherein the error correction results in the error corrected sequence of bits. The error correction may exemplarily include grouping bits of the sifted sequence into a set and determining, by at least one of the communicating parties, a position of the set in the sequence as well as a parity of the bits in the set. The communicating parties may exchange information about the position of the set and the parity to identify positions of the incorrect bits. The error corrected sequence may then be obtained by discarding the incorrect bits by both communicating parties or correcting the incorrect bits by only one of the communicating parties.

In step 108, an imbalance of the measurement channels assigned to the correct bits may be determined using the measurement information. Step 108 may exemplarily comprise summing contributions from the measurement channels to the error corrected sequence. For example, for a total of four measurement channels, e.g. HH, VV, DD and AA, a total of four contributions may be determined. For example, the measurement information may indicate measurements performed in the H/V basis while the correct bits of the error corrected sequence of bits indicate corresponding values of 0 or 1 associated with said measurements in the H/V basis. A particular correct bit having a value of 0 and associated measurement information "H/V" may thus exemplarily be determined to provide a contribution to the measurement channel "HH". The number of bits in the error corrected sequence with a value of "0" measured in the H/V basis may then be summed up to determine the contribution of the HH channel to the error corrected sequence. The contributions of the other three measurement channels may be determined analogously.

In step 110, the error corrected sequence of bits may be processed further in dependence of the imbalance. For example, the further processing 110 may comprise operations, in particular the privacy amplification, to correct for the imbalance when determining a secure sequence to be used for cryptographic applications.

The disclosed quantum communication method may for example be performed in response to an execution of machine executable instructions comprised by the disclosed computer program. The disclosed computer program may exemplarily be provided on a digital storage medium, a computer-readable medium or as a computer program product, wherein said computer-readable medium or said computer program product stores the machine executable instructions. In particular, the computer program may be provided as a downloadable file or as part of a software package. The digital storage medium or computer-readable medium may exemplarily comprise a memory unit of a computer system, a flash drive such as a USB stick, a hard disk drive, a solid state drive or an optical storage disk such as for example a CD.

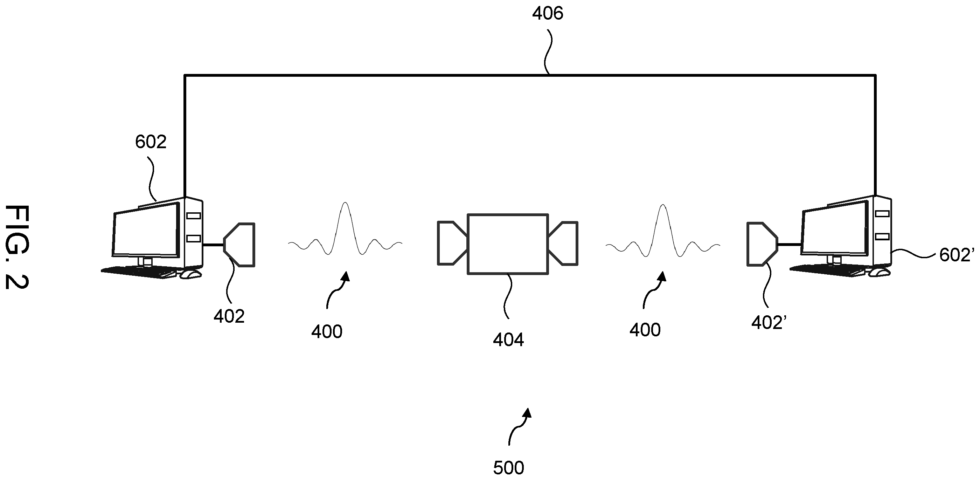

**Figure 2** is a schematic of a quantum communication system 500 comprising a first and second quantum communication receiver 402, 402'. The first quantum communication receiver may be a quantum communication receiver of a first communicating party while the second quantum communication receiver 402' may be a quantum communication receiver of a second communicating party.

Any one of the quantum communication receivers 402, 402' may in particular comprise a single photon detector. The quantum communication receivers 402, 402' may be configured to detect polarizations of single photons 400, for example polarizations of the single photons 400 in the H/V basis or the D/A basis. Any one of the quantum communication receivers 402, 402' may exemplarily comprise a silicon single-photon avalanche diode (Si-SPAD), wherein the Si-SPAD may in particular be configured for detecting photons 400 having optical wavelengths shorter than 1 µm and in particular for transmitting entangled pairs of photons 400 across local fiber-optic networks, wherein fiber-optic cables in the fiber-optic networks may possess lengths up to 1 km. In another example, any one of the quantum communication receivers 402, 402' may comprise a photomultiplier tube.

In another example, any one of the quantum communication receivers 402, 402' may comprise an InGaAs-based single-photon avalanche diode (InGaAs-SPAD), wherein the InGaAs-SPAD may in particular be configured for detecting photons 400 having optical wavelengths longer than 1 µm and in particular for transmitting photons 400, preferably photons with a wavelength of 1550 nm, across fiber-optic cables for distances of up to 80 km.

In yet another example, any one of the quantum communication receivers 402, 402' may comprise a nanowire detector, for example a super-conducting nanowire single photon detector (SNSPD).

The quantum communication system may further comprise a source 404, wherein the source 404 in particular comprises a source of single entangled pairs of photons 400. The source 404 may be configured for sending individual photons 400 of a given entangled pair of photons to each of the quantum communication receivers 402, 402'. The quantum communication system may further comprise polarizations filters not shown in Fig. 2, wherein the polarization filters may be configured to select whether an individual photon 400 is to be measured in the H/V basis or the D/A basis.

The source 404 may exemplarily comprise an entangled photon pair source, an on-demand single photon emitter or a laser damped to provide single photons.

Furthermore, the quantum communication system 500 may further comprise computer systems 602, 602', wherein the first quantum communication receiver 402 is communicatively coupled to a first computer system 602 and the second quantum communication receiver 402' is communicatively coupled to a second computer system 602'. The first and second computer systems 602, 602' may further be coupled to each other via a classical communication channel 406. The classical communication channel may be used to exchange the time stamps and the measurement basis information between the computer systems 602, 602' during the sifting operation. The first and second communicating parties may execute the quantum communication method using the respective first and second computer systems 602, 602'.

The computer systems 602, 602' may be configured to execute the machine executable instructions comprised by the disclosed computer program.

The disclosed quantum communication method may preferably be implemented in a secure environment. For example, the secure environment may require an authentication, e.g. a two-factor authentication or a valid security certificate, to access data stored on the computer systems 602, 602'. Said authentication may ensure that no unauthorized party such as an eavesdropper is able access confidential information stored on the computer systems 602, 602', for example the sifted sequence or the error corrected sequence.

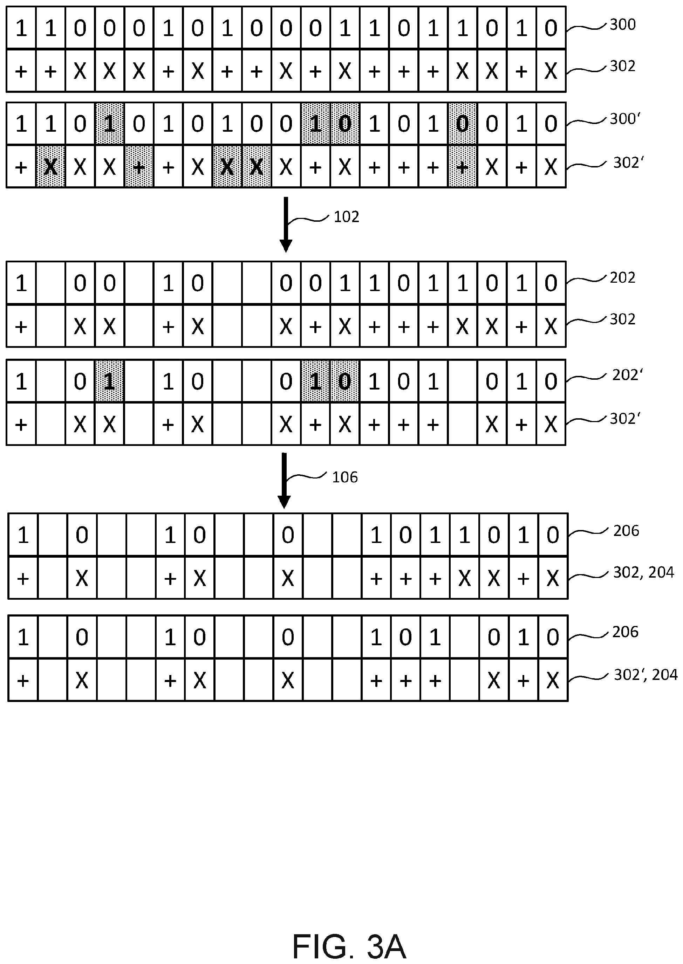

**Figure 3A** is a schematic of an exemplary sifting operation 102 and error correction operation 106 performed on a first and second raw sequence of bits 300, 300'. According to the example shown in Fig. 3A, the first raw sequence 300 may be obtained by the first communicating party, having measured the bases indicated by a first measurement basis information 302, wherein "+" indicates a measurement in the H/V basis and "X" indicates a measurement in the D/A basis. Similarly, the second raw sequence 300' may be obtained by the second communicating party, having measured the bases indicated by a second measurement basis information 302'. The first and second communicating parties may further receive respective time stamps associated with the respective first and second measurement basis information 302, 302', wherein said time stamps enable a sorting of the respective first and second raw sequences 300, 300'. Furthermore, the time stamps may be used to match bits between the first and second raw sequences 300, 300' as belonging to specific entangled pairs of photons. For example, both communicating parties may measure a photon within a predefined time span, indicating that both photons of a particular entangled pair of photons were measured. If in contrast only the first communicating party measures a photon in a particular time span, this may indicate that the second photon of the entangled pair of photons could not be detected by the second communicating party, for example due to an insufficient temporal resolution of a detector of the second communicating party, wherein the insufficient temporal resolution may for example be due to technical insufficiencies of a detector or a time tagger. Furthermore, there may be an optical loss of photons during transmission. In this case, the measurement of the photon by the first communicating party may be discarded.

The communicating parties may compare their respective measurement basis information 302, 302', for example using the classical communication channel 406 shown in Fig. 2. As a result of the exchanging, mismatches between the measurement basis information 302, 302' of the two communicating parties may be determined, said mismatches being exemplarily highlighted by shaded areas of the measurement basis information 302' of the second communicating party. To perform the sifting operation and receive the sifted sequences 202, 202' in step 102, any bits in the raw sequences 300, 300' associated with said mismatches may be discarded.

According to the example shown in Fig. 3A, once differences between the sifted keys are detected during the error correction operation 106, such incorrect bits indicated by the shaded boxes in the sifted sequences 202, 202' are discarded in the sifted sequences 202, 202' of both communicating parties, resulting in the error corrected sequence 206 being obtained by both communicating parties. By discarding the incorrect bits, possible biases which may arise when correcting the incorrect bits may be avoided. For example, a detector of one of the communicating parties may have a bias towards a larger number of incorrect measurements of vertical over horizontal polarizations, resulting in an unequal distribution of zeros and ones in the raw sequence 300, 300' of said one of the communicating parties for measurements in the H/V basis.

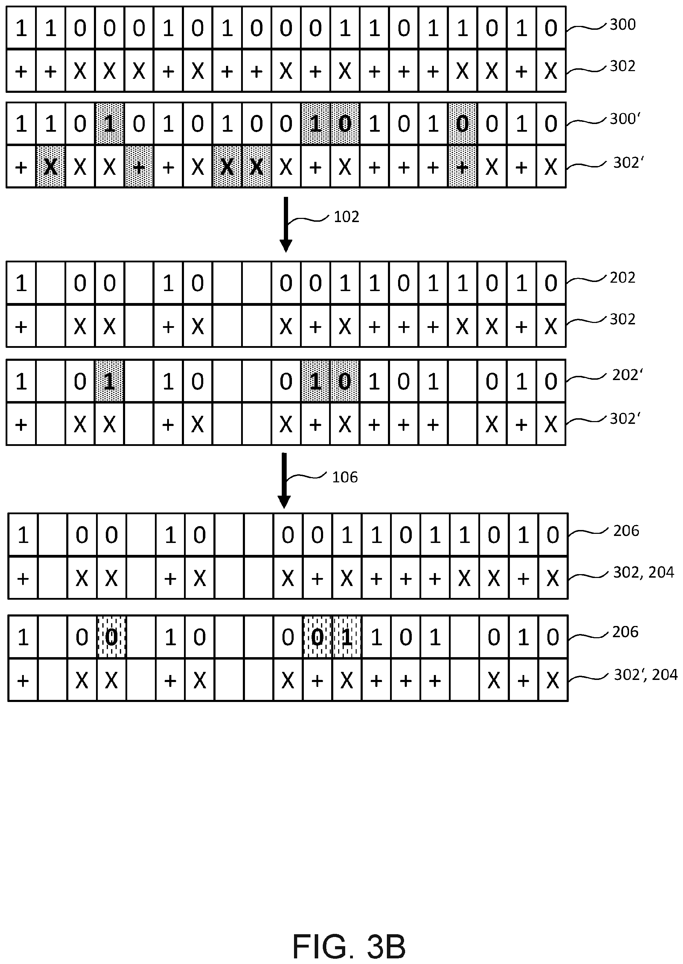

**Figure 3B** is a schematic of a further exemplary sifting operation 102 and error correction operation 106 performed on a first and second raw sequence of bits 300, 300'.

Fig. 3B shows the same raw sequences 300, 300' and corresponding measurement basis information 302, 302' as shown in Fig. 3A. However, in contrast to the error correction operation 106 shown in Fig. 3A wherein the incorrect bits are discarded by both communicating parties, one of the communicating parties retains the incorrect bits while the other of the communicating parties flips the value of the bit at the location in the sequence associated with the incorrect bits. Which one of the communicating parties retains the incorrect bits and which one flips the value of the incorrect bits may be determined before starting the quantum communication protocol, preferably using the classical communication channel 406 shown in Fig. 2. Using the error correction operation 106 as shown in Fig. 3B, the length of the error corrected sequence 206 is not reduced compared to the length of the first and second sifted sequences 202, 202', thus retaining more information.

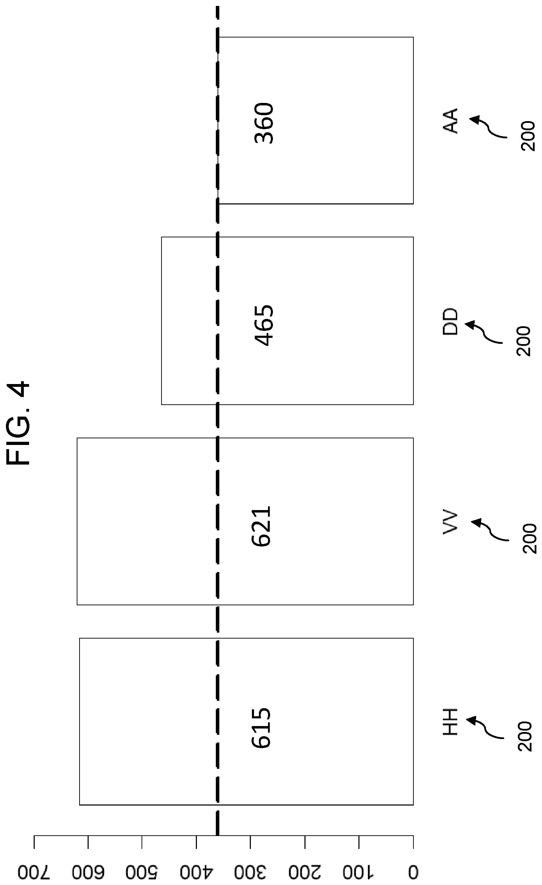

**Figure 4** is a bar plot showing an imbalance in contributions of four measurement channels 200 to an error corrected sequence.

The measurement channels 200 shown in Fig. 4 include the measurement channels HH, VV, DD and AA. According to the exemplary contributions of the measurement channels 200 shown in Fig. 4, an error corrected sequence comprising a total of 2061 bits may have been obtained after the error correction operation 106 shown in Fig. 1. The 2061 bits may comprise 615 "0" values resulting from a measurement of horizontal polarizations, 621 "1" values resulting from measurements of vertical polarization, 465 "0" values resulting from measurements of diagonal polarization and 360 "1" values resulting from measurements of antidiagonal polarization.

According to this example, the minimal number of measurements across all measurement channels 200 is 360 for the measurement channel AA. The privacy amplification may exemplarily select bits to be removed from the error corrected sequence. The imbalance may be corrected by removing a total of (615-360)+(621-360)+(465-360) = 255 + 261 + 105 = 621 bits from the error corrected sequence. A selection scheme may be implemented to select 255 measurements of the measurement channel HH, 261 measurements of the measurement channel VV and 105 measurements of the measurement channel DD whose corresponding bits may be removed from the error corrected sequence to obtain a balanced, modified error corrected sequence having a length of 4 ∗ 360 = 1440 bits.

In an alternative example, all 2061 bits of the error corrected sequence of the previous example may be retained, and the PAR may be modified instead. The PAR may for example be increased as follows $PAR ′ = PAR ∗ {PAR}_{equalize} = PAR ∗ \frac{HH + VV + DD + AA}{4 ∗ min \left(HH.VV.DD.AA\right)} = PAR ∗ \frac{2061}{4 ∗ 360} = PAR ∗ 1 , 43125$ . Consequently, the secure sequence obtained after privacy amplification according to this example will be shorter than the error free sequence by a factor of 1,43125.

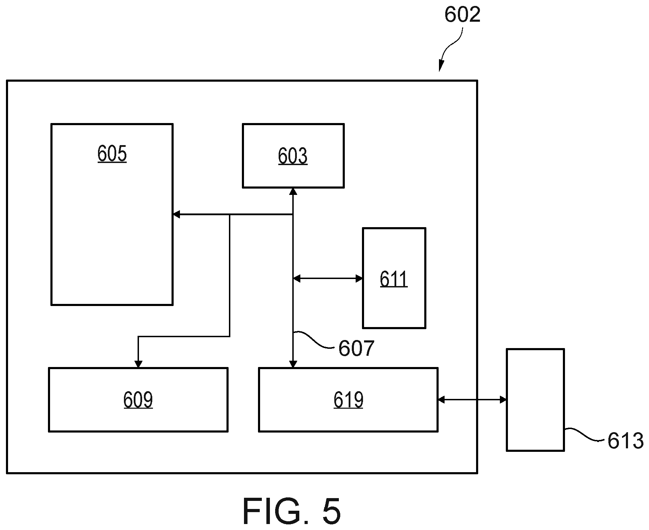

**Figure 5** is a block diagram of an exemplary computer system 602 for implementing the present method in accordance with an example of the present subject matter. The components of the computer system 602 may include, but are not limited to, one or more processors or processing units 603, a storage system 611, a memory unit 605, and a bus 607 that couples various system components including memory unit 605 to processor 603. The storage system 611 may include for example a hard disk drive (HDD). The memory unit 605 may include computer system readable media in the form of volatile memory, such as random access memory (RAM) and/or cache memory.

The computer system 602 may also communicate with one or more external devices such as a keyboard, a pointing device, a display 613, etc.; one or more devices that enable a user to interact with computer system 602; and/or any devices (e.g., network card, modem, etc.) that enable the computer system 602 to communicate with one or more other computing devices. Such communication can occur via I/O interface(s) 619. Still yet, the computer system 602 can communicate with one or more networks such as a local area network (LAN), a general wide area network (WAN), and/or a public network (e.g., the Internet) via a network adapter 609. As depicted, the network adapter 609 communicates with the other components of the client system 602 via bus 607.

The memory unit 605 is configured to store applications that are executable on the processor 603. For example, the memory unit 605 may comprise an operating system as well as one or more application programs. The application programs comprise instructions that when executed enable to perform the method described before, e.g. with reference to Fig. 1.

As will be appreciated by one skilled in the art, aspects of the present disclosure may be implemented as an apparatus, method, computer program or computer program product. Accordingly, aspects of the present disclosure may take the form of an entirely hardware implementation, an entirely software implementation (including firmware, resident software, micro-code, etc.) or an implementation combining software and hardware aspects that may all generally be referred to herein as a "circuit," "module" or "system." Furthermore, aspects of the present disclosure may take the form of a computer program product embodied in one or more computer readable medium(s) having computer executable code embodied thereon. A computer program comprises the computer executable code or "program instructions".

The term "computer system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present disclosure. Computer executable code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

It is understood that one or more of the aforementioned examples may be combined as long as the combined examples are not mutually exclusive.

While the invention has been illustrated and described in detail in the drawings and foregoing description, such illustration and description are to be considered illustrative or exemplary and not restrictive; the invention is not limited to the disclosed examples.

### REFERENCE SIGNS LIST

- 100: quantum communication method
- 102: receiving a sifted sequence
- 104: receiving measurement information
- 106: determining a set of correct and incorrect bits
- 108: determining an imbalance
- 110: further processing of the error corrected sequence
- 200: measurement channels
- 202, 202': sifted sequence of bits
- 204: measurement information
- 206: error corrected sequence of bits
- 300, 300': raw sequence of bits
- 302, 302': measurement basis information
- 400: entangled (set of) photons
- 402, 402': quantum communication receiver
- 404: source
- 406: classical communication channel
- 500: quantum communication system
- 602, 602': computer system
- 603: processors
- 605: memory unit
- 607: bus
- 609: network adapter
- 611: storage system
- 613: external devices
- 619: I/O-Interface

## Claims

1. A quantum communication method (100) comprising measuring quantum states on a predefined set of measurement channels (200) in accordance with a quantum communication protocol, the method (100) comprising:
- receiving (102) a sifted sequence (202, 202') of bits;
- receiving (104) measurement information (204) relating bits of the sifted sequence (202, 202') to respective measurement channels (200);
- determining (106) a set of correct and incorrect bits in the sifted sequence (202, 202') for performing an error correction, resulting in an error corrected sequence (206) of bits;
- determining (108) an imbalance of the measurement channels (200) assigned to the correct bits using the measurement information (204); and
- further processing (110) the error corrected sequence (206) of bits in dependence of the imbalance.

2. The method (100) according to claim 1, wherein the further processing (110) comprises performing a privacy amplification to provide a secure sequence of bits, wherein the privacy amplification is performed in proportion to the imbalance,
wherein the performing of the privacy amplification preferably comprises:
- removing bits from the error corrected sequence (206) in proportion to the imbalance; and/or
- increasing the privacy amplification in proportion to the imbalance.

3. The method (100) according to claim 2, wherein the removing of the bits from the error corrected sequence (206) comprises removing bits in accordance with a selection scheme, wherein the selection scheme selects the bits to be removed from the error corrected sequence (206) by:
- selecting a subsequence of bits from the error corrected sequence (206), in particular wherein the subsequence is located at the beginning or the end of the error corrected sequence (206);
- selecting the bits randomly;
- selecting the bits using a periodic selection pattern; and/or
- selecting the bits using a selection function, wherein the selection function is configured to provide a set of indices indicating the bits to be removed, wherein the selection function preferably comprises a modulo operation.

4. The method (100) according to any one of claims 2 or 3, wherein the privacy amplification further comprises applying a function to the error corrected sequence (206), wherein the function maps inputs of an arbitrary length to a space of outputs having a fixed length, such that the outputs are statistically independent and uniformly and randomly distributed in the space of outputs,
wherein the function is configured to provide the secure sequence as a secure sequence of fixed length given the error corrected sequence (206) as input,
wherein the function in particular comprises a hash function,
wherein preferably the fixed length of the secure sequence and the privacy amplification determine a required length of the error corrected sequence (206).

5. The method (100) according to claim 4, wherein the privacy amplification comprises:
- determining if the error corrected sequence (206) is at least as long as the required length; and
- in case of the error corrected sequence (206) being at least as long as the required length, applying the function to the error corrected sequence (206), resulting in the secure sequence; or
- in case of the error corrected sequence (206) being shorter than the required length, extending the error corrected sequence (206),
wherein preferably one of the following applies:
- the extending of the error corrected sequence (206) comprises repeating the quantum communication method (100), resulting in a further error corrected sequence, and wherein the error corrected sequence is extended by combining the error corrected sequence (206) with the further error corrected sequence; or
- the quantum communication method is performed continuously at least until the error corrected sequence (206) has reached its required length.

6. The method (100) according to claims 4 or 5, wherein the function comprises any one of a SHA-2 family hash function, a SHA-3 family hash function, a Toeplitz hash function, a 2-universal hash function, or a rolling hash function.

7. The method (100) according to any one of the preceding claims,
wherein the receiving (102) of the sifted sequence (202, 202') comprises:
- receiving a raw sequence of bits (300, 300');
- receiving a first and second sequence of measurement basis information (302, 302') relating bits of the raw sequence to respective measurement channels (200), wherein the first and second sequence of measurement basis information (302, 302') further comprises timestamps, wherein the timestamps are indicative of measurement times of the measuring of the quantum states on the predefined set of measurement channels (200);
- determining mismatches between the first and second sequences of measurement basis information (302, 302') using the timestamps; and
- removing bits associated with the mismatches from the raw sequence (300, 300'), resulting in the sifted sequence (202, 202');
and wherein the receiving (104) of the measurement information (204) comprises:
- generating a subsequence of the first sequence of measurement basis information (302) by removing measurement basis information associated with the mismatches from the first sequence of measurement basis information; and
- receiving the measurement information (204) as the subsequence of the first sequence of measurement basis information (302).

8. The method (100) according to any one of the preceding claims, wherein the further processing (110) comprises:
- determining if the imbalance fulfills a criterion, wherein the criterion preferably comprises evaluating statistical measures on a number of measured quantum states in the measurement channels (200), the statistical measures exemplarily comprising a standard deviation and/or a variance; and
- providing an error signal if the criterion is fulfilled, wherein the error signal is preferably configured to trigger a repetition or a discontinuation of the quantum communication method (100).

9. The method (100) according to any one of claims 2 to 8, wherein the secure sequence of bits comprises any one of a one-time pad, a private key for performing an asymmetric encryption algorithm, a seed for a random number generator, a password for authenticating a user or a password for securing a computer system (602) or data stored on the computer system (602).

10. The method (100) according to any one of the preceding claims, wherein the quantum communication protocol comprises transmitting entangled photons (400) across fiber-optic cables, through water and/or across free space.

11. The method (100) according to any one of the preceding claims, wherein the quantum communication protocol comprises any one of a BB84 protocol, a BBM92 protocol, an E91 protocol, an RRDPS protocol, or a continuous-variable protocol for quantum key distribution.

12. The method (100) according to any one of the preceding claims, wherein the measured quantum states comprise quantum states of an entangled set of photons (400), wherein at least one or more photons in the entangled set of photons (400) comprises a wavelength of 810 nm, 785 nm, 740 nm, 680 nm, 500 nm to 550 nm, or a wavelength in the short wavelength near infrared spectrum, in particular a wavelength in the C-band, the L-band, or the O-band.

13. A computer program comprising machine executable instructions, wherein execution of the machine executable instructions causes a quantum communication receiver (402) to process quantum communication information, wherein the processing of the quantum communication information comprises:
- receiving (102) a sifted sequence (202, 202') of bits;
- receiving (104) measurement information (204) relating bits of the sifted sequence (202, 202') to respective measurement channels (200);
- determining (106) a set of correct and incorrect bits in the sifted sequence (202, 202') for performing an error correction, resulting in an error corrected sequence (206) of bits;
- determining (108) an imbalance of the measurement channels (200) assigned to the correct and incorrect bits using the measurement information (204); and
- further processing (110) the error corrected sequence (206) of bits in dependence of the imbalance.

14. A quantum communication receiver (402, 402') configured for measuring quantum states on a predefined set of measurement channels (200) in accordance with a quantum communication protocol,
wherein the quantum communication receiver comprises a memory unit (605) storing machine executable instructions, wherein execution of the machine executable instructions causes the quantum communication receiver (402, 402') to:
- receive (102) a sifted sequence of bits (202, 202');
- receive (104) measurement information (204) relating bits of the sifted sequence (202, 202') to respective measurement channels (200);
- determine (106) a set of correct and incorrect bits in the sifted sequence (202, 202') for performing an error correction, resulting in an error corrected sequence (206) of bits;
- determine (108) an imbalance of the measurement channels (200) assigned to the correct bits using the measurement information (204); and
- further process (110) the error corrected sequence (206) of bits in dependence of the imbalance.

15. A quantum communication system (500),
wherein the quantum communication system (500) comprises at least a first and second quantum communication receiver (402, 402') according to claim 14 respectively.
